# EUROPEAN PATENT APPLICATION

(11) **EP 4 741 190 A1**
(43) Date of publication of application: **13.05.2026**
(21) Application number: 23943956.5
(22) Date of filing: 07.07.2023
(51) Int. Cl.: B60K 1/00, B60K 1/02, B60K 17/16, H02K 5/22, H02K 7/00, H02K 7/116, H02K 11/30, H02M 7/48

(54) **DRIVE UNIT**

(71) Applicant: Nissan Motor Co., Ltd., Yokohama-shi, Kanagawa 220-8623 (JP)
(72) Inventor: SATO, Seiichi, Atsugi-shi, Kanagawa 243-0123 (JP); FUKUHARA, Yusuke, Atsugi-shi, Kanagawa 243-0123 (JP); ASAKURA, Daisuke, Atsugi-shi, Kanagawa 243-0123 (JP)
(74) Representative: Hoefer & Partner Patentanwälte mbB
(86) International application number: PCT/JP2023/025301
(87) International publication number: WO 2025/013134

(57) **Abstract**

A drive unit to be mounted on a vehicle according to an aspect of the present invention, the drive unit including: a high-voltage unit electrically connected to a battery; a motor configured to allow electric power from the high-voltage unit to be supplied via an inverter; and a gear box provided on a shaft of the motor and configured to accommodate a shaft gear having a diameter smaller than an outer diameter dimension of the motor, the high-voltage unit, the motor, and the gear box being unitized. In this drive unit, at least a part of components of the inverter is accommodated in an accommodating chamber formed as a space different from a gear chamber accommodating the shaft gear due to a dimensional difference between the outer diameter dimension of the motor and an outer diameter dimension of the shaft gear, and in a vehicle mounted state, the motor is disposed on one side in a vehicle width direction of the gear box, and the high-voltage unit is disposed on the other side in the vehicle width direction of the gear box.

## Description

### TECHNICAL FIELD

The present invention relates to a drive unit.

### BACKGROUND ART

JP2005-262894A discloses a vehicle using a drive source as a motor.

An inverter and a motor to which a drive signal is supplied from the inverter are provided in an engine room at a vehicle front part of the vehicle. Output from the motor is transmitted to drive wheels via a gear mechanism.

### SUMMARY OF INVENTION

### PROBLEMS TO BE SOLVED BY THE INVENTION

In this vehicle, since the inverter and the motor are arranged at positions separated from each other, there is a problem that an arrangement space is required.

The present invention has been made in view of such a problem, and an object of the present invention is to provide a drive unit capable of reducing an arrangement space.

### MEANS FOR SOLVING THE PROBLEM

A drive unit to be mounted on a vehicle according to an aspect of the present invention, the drive unit including: a high-voltage unit electrically connected to a battery; a motor configured to allow electric power from the high-voltage unit to be supplied via an inverter; and a gear box provided on a shaft of the motor and configured to accommodate a shaft gear having a diameter smaller than an outer diameter dimension of the motor, the high-voltage unit, the motor, and the gear box being unitized. In this drive unit, at least a part of components of the inverter is accommodated in an accommodating chamber formed as a space different from a gear chamber accommodating the shaft gear due to a dimensional difference between the outer diameter dimension of the motor and an outer diameter dimension of the shaft gear, and in a vehicle mounted state, the motor is disposed on one side in a vehicle width direction of the gear box, and the high-voltage unit is disposed on the other side in the vehicle width direction of the gear box.

In the drive unit, the accommodating chamber is formed in the gear box as a space different from the gear chamber due to a dimensional difference between the outer diameter dimension of the motor and the outer diameter dimension of the shaft gear. Further, at least a part of the components of the inverter are accommodated in the accommodating chamber. Therefore, the arrangement space may be reduced in the drive unit as compared with a case where all the components of the inverter are arranged outside the gear box.

Further, the motor that sends a driving force to the gear box is disposed on one side in the vehicle width direction of the gear box, and the high-voltage unit that supplies electric power to the inverter is disposed on the other side in the vehicle width direction of the gear box in which the components of the inverter are accommodated. Accordingly, the motor, the gear box, and the high-voltage unit can be unitized by being arranged side by side without complicating mechanical connection and electrical connection, and thus the arrangement space may be further reduced.

### BRIEF DESCRIPTION OF DRAWINGS

[FIG. 1] FIG. 1 is a perspective view illustrating a drive unit according to the present embodiment.
[FIG. 2] FIG. 2 is a plan view illustrating the drive unit according to the present embodiment.
[FIG. 3] FIG. 3 is a perspective view illustrating the drive unit according to the present embodiment, and illustrates a state in which a part of a gear box is opened.
[FIG. 4] FIG. 4 is a sectional view of a main part of the drive unit according to the present embodiment, illustrating a state in which a motor housing is cut.
[FIG. 5] FIG. 5 is a schematic diagram used for describing the drive unit according to the present embodiment.
[FIG. 6] FIG. 6 is a perspective view illustrating a drive unit according to a first modification of the present embodiment.
[FIG. 7] FIG. 7 is a perspective view illustrating a drive unit according to a second modification of the present embodiment, illustrating a state where a high-voltage unit is removed.
[FIG. 8] FIG. 8 is a schematic diagram used for describing the drive unit according to the second modification of the present embodiment.

### DESCRIPTION OF EMBODIMENTS

### <Embodiment>

Hereinafter, an embodiment of the present invention will be described with reference to the drawings.

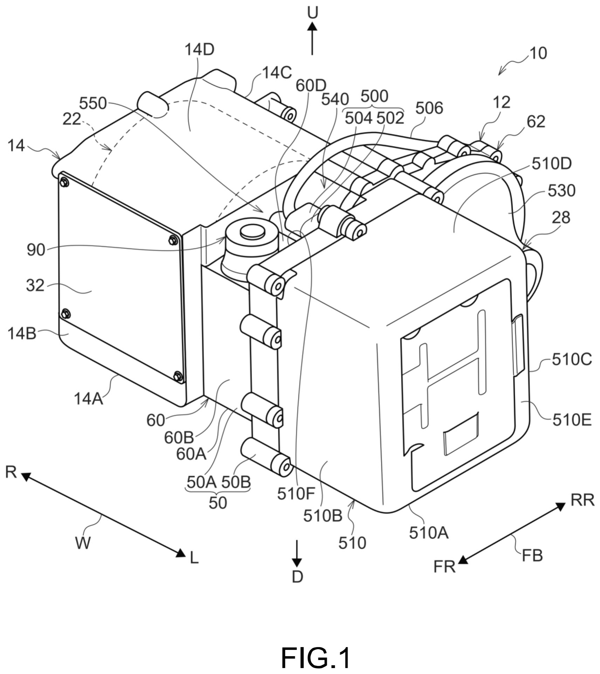

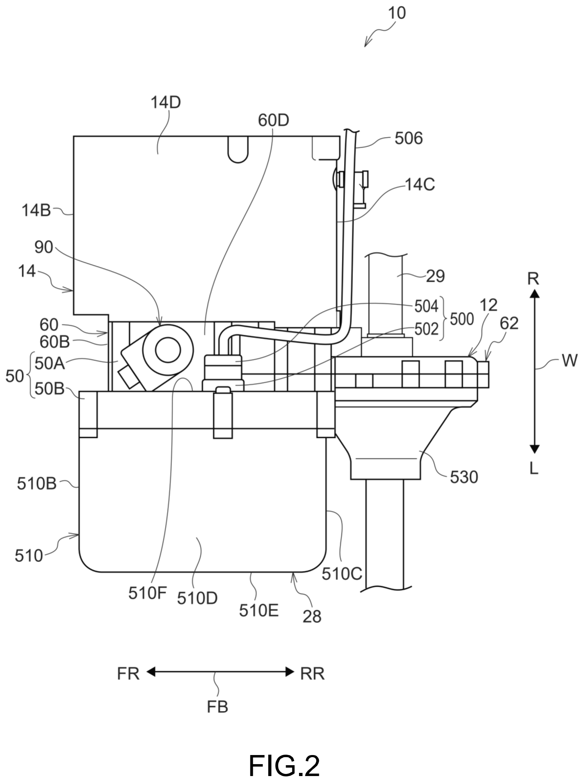

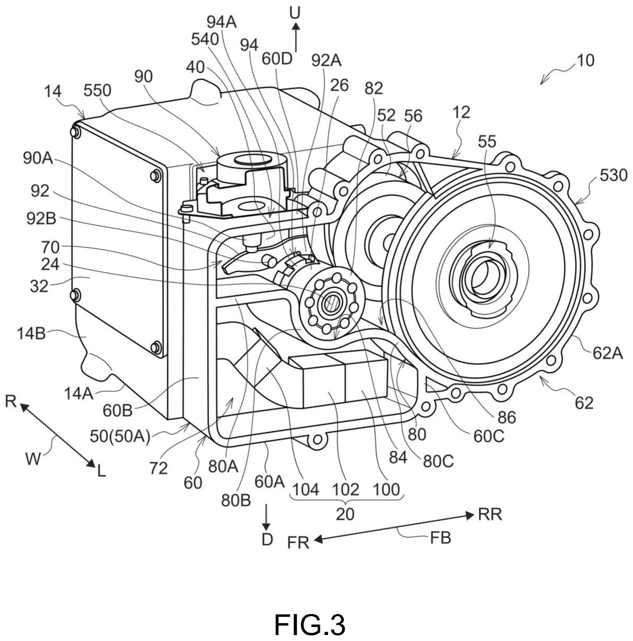

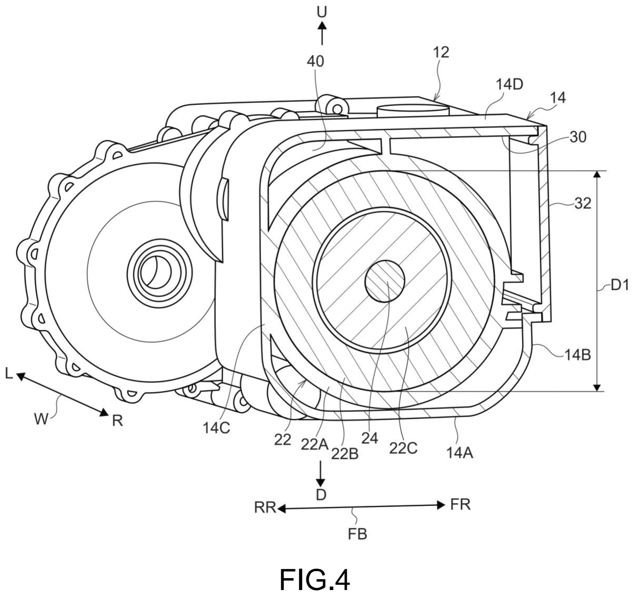

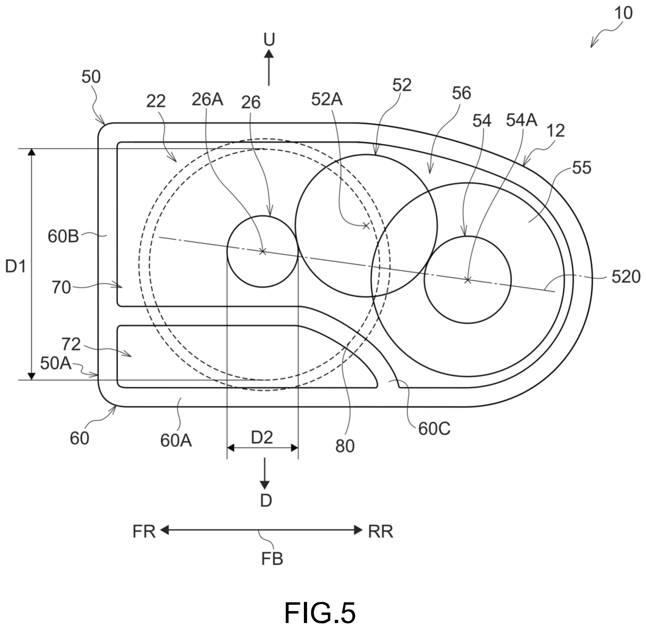

FIG. 1 is a perspective view illustrating a drive unit 10 according to the present embodiment. FIG. 2 is a plan view illustrating the drive unit 10 according to the present embodiment. FIG. 3 is a perspective view illustrating the drive unit 10 according to the present embodiment, and FIG. 3 illustrates a state in which a part of a gear box 12 is opened. FIG. 4 is a sectional view of a main part of the drive unit 10 according to the present embodiment, illustrating a state in which a motor housing 14 is cut. FIG. 5 is a schematic diagram illustrating the drive unit 10 according to the present embodiment.

As illustrated in FIGS. 1 to 3, the drive unit 10 is used in, for example, an electric vehicle. The drive unit 10 is mounted on a vehicle and drives drive wheels provided in the vehicle. The drive unit 10 is disposed on a vehicle front FR side and drives front wheels of the vehicle.

The drive unit 10 includes a high-voltage unit 28 electrically connected to a battery (not illustrated) to be mounted on a vehicle rear RR side. The high-voltage unit 28 exchanges electric power with the battery. The drive unit 10 includes a motor 22 that allows the electric power from the high-voltage unit 28 to be supplied via an inverter 20. The drive unit 10 further includes the gear box 12 that is provided on a shaft 24 (see FIG. 3) of the motor 22 and accommodates a shaft gear 26 having a diameter smaller than an outer diameter dimension D1 of the motor 22 (see FIGS. 4 and 5). The high-voltage unit 28, the motor 22, and the gear box 12 are unitized.

In a vehicle mounted state in which the drive unit 10 is mounted on a vehicle, the motor 22 is disposed on a vehicle right R side as one side in a vehicle width direction W of the gear box 12. The high-voltage unit 28 is disposed on a vehicle left L side as the other side in the vehicle width direction W of the gear box 12.

The drive unit 10 is disposed such that the shaft 24 extending from the motor 22 extends in the vehicle width direction W in the vehicle mounted state (see FIG. 3). In the drive unit 10, a differential gear 55 (see FIGS. 3 and 5) that drives a drive shaft 29 (see FIG. 2) of the drive wheel is disposed on a vehicle rear RR side with respect to the shaft 24 of the motor 22.

### (Motor)

As illustrated in FIG. 4, the motor 22 is accommodated in the motor housing 14 that is rectangular. The motor housing 14 has a motor housing bottom surface 14A and a motor housing front wall surface 14B extending upward U from an edge of the motor housing bottom surface 14A on the vehicle front FR side. In addition, the motor housing 14 has a motor housing rear wall surface 14C extending upward U from an edge of the motor housing bottom surface 14A on the vehicle rear RR side, and a motor housing top surface 14D that couples the motor housing front wall surface 14B and the motor housing rear wall surface 14C.

The motor housing front wall surface 14B has a front opening 30, and the front opening 30 is closed by a lid body 32.

The motor 22 includes a motor case 22A. The motor case 22A is coupled to the motor housing 14 and holds the motor 22 on the motor housing 14. In the motor case 22A, a stator 22B is provided along an inner wall surface of the motor case 22A. A rotor 22C is rotatably provided inside the stator 22B. The rotor 22C is provided with the shaft 24. The shaft 24 extends into the gear box 12 through a partition wall 40 that partitions the motor housing 14 and the gear box 12. In the present embodiment, the outer diameter dimension D1 of the motor 22 is determined by an outer diameter of the stator 22B.

The motor 22 is a so-called rotating electrical machine having a function as an electric motor that receives supply of electric power and rotates the drive wheels and a function as a generator that receives a rotational force from the drive wheels and generates (regenerates) electric power.

### (High-voltage Unit)

As illustrated in FIGS. 1 and 2, the high-voltage unit 28 is a device that handles a high-voltage power supply from the battery that drives the motor 22. Electric power from the battery is supplied to the high-voltage unit 28 via a connector 500.

The connector 500 includes a socket 502 provided in the high-voltage unit 28 and a plug 504 detachably connected to the socket 502. A wire harness 506 is connected to the plug 504, and the wire harness 506 is connected to the battery.

The high-voltage unit 28 is incorporated with a junction box for relaying the high-voltage power supply, a DC-DC converter, and a charger (not illustrated). Electric power from the battery is sent to the DC-DC converter via the junction box. In addition, the electric power from the battery is sent to an external air compressor and another auxiliary device via the junction box. Electric power supplied from the external charging device is sent to the charger via the junction box. The charger charges the battery connected to the high-voltage unit 28.

As illustrated in FIG. 1, the high-voltage unit 28 includes a rectangular high-voltage unit housing 510.

The high-voltage unit housing 510 has a high-voltage unit housing bottom surface 510A and a high-voltage unit housing front wall surface 510B extending upward U from an edge of the high-voltage unit housing bottom surface 510A on the vehicle front FR side. In addition, the high-voltage unit housing 510 has a high-voltage unit housing rear wall surface 510C extending upward U from an edge of the high-voltage unit housing bottom surface 510A on the vehicle rear RR side. Further, the high-voltage unit housing 510 has a high-voltage unit housing top surface 510D that couples the high-voltage unit housing front wall surface 510B and the high-voltage unit housing rear wall surface 510C.

The high-voltage unit housing 510 has a left wall surface 510E that couples, at an edge on the vehicle left L side, the high-voltage unit housing bottom surface 510A, the high-voltage unit housing front wall surface 510B, the high-voltage unit housing rear wall surface 510C, and the high-voltage unit housing top surface 510D. In the high-voltage unit housing 510, a right wall surface 510F (see FIGS. 1 and 2) on the vehicle right R side is implemented by a part of a high-voltage side constituent part 50B of a gear box housing 50 described later (see FIGS. 1 and 2).

### (Gear Box)

As illustrated in FIGS. 1 and 2, the gear box 12 includes the gear box housing 50.

The gear box housing 50 includes a motor side constituent part 50A constituting a motor housing 14 side and the high-voltage side constituent part 50B constituting a high-voltage unit 28 side.

The gear box housing 50 mainly includes a box body 60 disposed between the motor housing 14 and the high-voltage unit housing 510, and a box extension 62 extending from the box body 60 to the vehicle rear RR side.

As illustrated in FIG. 3, the shaft gear 26 provided on the shaft 24 of the motor 22 and a part of a meshing gear 52 that meshes with the shaft gear 26 are disposed at a portion of the motor side constituent part 50A that constitutes the box body 60. In addition, a part of the meshing gear 52 and an interlocking gear 54 (see FIG. 5) that meshes with and interlocks with the meshing gear 52 are disposed at a portion of the motor side constituent part 50A that constitutes the box extension 62.

As illustrated in FIG. 5, a meshing gear rotational axis 52A of the meshing gear 52 is disposed on the upper U side with a virtual straight line 520 as a boundary, the virtual straight line 520 connecting a shaft gear rotational axis 26A of the shaft gear 26 and an interlocking gear rotational axis 54A of the interlocking gear 54. In the drive unit 10, a length dimension from the shaft gear 26 to the interlocking gear 54 is reduced compared to a case where the shaft gear rotational axis 26A of the shaft gear 26, the meshing gear rotational axis 52A of the meshing gear 52, and the interlocking gear rotational axis 54A of the interlocking gear 54 are disposed on a straight line. Accordingly, in the drive unit 10, the dimension of the gear box 12 in the vehicle front-rear direction FB is reduced.

As illustrated in FIG. 2, a portion of the motor side constituent part 50A constituting the box body 60 constitutes a part of the gear box housing 50. The right wall surface 510F of the high-voltage unit housing 510 is formed at a portion of the high-voltage side constituent part 50B constituting the box body 60.

The differential gear 55 (see FIG. 5) to which a driving force is transmitted from the interlocking gear 54 is disposed in a portion of the high-voltage side constituent part 50B constituting the box extension 62. A portion of the high-voltage side constituent part 50B where the differential gear 55 is disposed constitutes a differential gear accommodating part 530. The differential gear accommodating part 530 is formed in a mountain shape in which a central portion thereof through which the drive shaft 29 is inserted protrudes to the vehicle left L side in the vehicle width direction W.

The differential gear 55 accommodated in the differential gear accommodating part 530 constitutes a differential device that drives the drive shaft 29.

As illustrated in FIGS. 3 and 5, the gear box 12 includes a gear mechanism 56 including the shaft gear 26, the meshing gear 52, the interlocking gear 54, and the differential gear 55. The meshing gear 52 has a larger diameter than the shaft gear 26, and the gear mechanism 56 constitutes a speed reduction mechanism. The gear mechanism 56 may constitute a speed increasing mechanism.

As illustrated in FIG. 3, the box extension 62 of the gear box housing 50 is formed in a shape corresponding to outer shapes of the meshing gear 52 and the differential gear 55 (see FIG. 5). The box extension 62 has a peripheral wall 62A along outer peripheries of the meshing gear 52 and the differential gear 55.

The box body 60 of the motor side constituent part 50A has a body bottom surface 60A and a body front wall surface 60B extending to the upper U side from an edge of the body bottom surface 60A on the vehicle front FR side. In addition, the box body 60 of the motor side constituent part 50A has a body rear wall surface 60C that extends to the upper U side from the edge of the body bottom surface 60A on the vehicle rear RR side and is connected to the peripheral wall 62A of the box extension 62. Further, the box body 60 of the motor side constituent part 50A has a body top surface 60D that couples the body front wall surface 60B and the peripheral wall 62A of the box extension 62.

Accordingly, the box body 60 of the motor side constituent part 50A is formed in a rectangular shape in a cross section, a part of which in contact with the box extension 62 is lost. In addition, the body top surface 60D and a portion of the peripheral wall 62A of the box extension 62 to which the body top surface 60D is connected constitute a gear box top surface 540 of the gear box housing 50 disposed on the upper U side in the vehicle mounted state.

As illustrated in FIGS. 1 and 2, the gear box housing 50 has a shape in which the body front wall surface 60B located on the vehicle front FR side in the vehicle mounted state does not protrude beyond the motor housing front wall surface 14B of the motor housing 14 and the high-voltage unit housing front wall surface 510B of the high-voltage unit housing 510.

The body bottom surface 60A of the box body 60 extends on an extension of the motor housing bottom surface 14A (see FIG. 3) of the motor housing 14 and the high-voltage unit housing bottom surface 510A of the high-voltage unit housing 510.

As illustrated in FIG. 2, the body front wall surface 60B of the gear box housing 50 located on the vehicle front FR side in the vehicle mounted state is disposed at a position retracted to inside of the gear box housing 50 from the motor housing front wall surface 14B of the motor housing 14 and the high-voltage unit housing front wall surface 510B of the high-voltage unit housing 510.

Accordingly, the body front wall surface 60B of the box body 60 extends to a portion on the vehicle rear RR side with respect to the motor housing front wall surface 14B of the motor housing 14 and the high-voltage unit housing front wall surface 510B of the high-voltage unit housing 510.

As illustrated in FIG. 1, the body top surface 60D of the box body 60 extends to a height position downward D of the motor housing top surface 14D of the motor housing 14 and the high-voltage unit housing top surface 510D of the high-voltage unit housing 510.

Accordingly, the body top surface 60D of the gear box housing 50 disposed on the upper U side in the vehicle mounted state constitutes a lower level part located downward D of the motor housing top surface 14D of the motor housing 14 and the high-voltage unit housing top surface 510D of the high-voltage unit housing 510.

Due to the lower level part (body top surface 60D), a recessed space 550 recessed downward D is formed between the motor housing 14 and the high-voltage unit housing 510. The socket 502 constituting the connector 500 is provided at a portion of the right wall surface 510F of the high-voltage unit housing 510 facing the recessed space 550. The plug 504 of the wire harness 506 connected to the battery is detachably connected to the socket 502.

Accordingly, the connector 500 including the socket 502 and the plug 504 for connecting the wire harness 506 to the high-voltage unit 28 is disposed in the recessed space 550. Further, the wire harness 506 is routed along the recessed space 550.

In addition to the connector 500 for supplying electric power of the battery, a connector for connecting the high-voltage unit 28 and an air compressor to which high-voltage power is supplied from the high-voltage unit 28 or another auxiliary device may be disposed in the recessed space 550.

As illustrated in FIGS. 3 and 5, the gear box 12 includes a gear chamber 70 in which the shaft gear 26 having a diameter smaller than the outer diameter dimension D1 of the motor 22 is accommodated. In addition, the gear box 12 includes an accommodating chamber 72 formed as a space different from the gear chamber 70 that accommodates the shaft gear 26 due to a dimensional difference between the outer diameter dimension D1 of the motor 22 and an outer diameter dimension D2 of the shaft gear 26 (see FIG. 5). The gear chamber 70 and the accommodating chamber 72 are partitioned by a partition wall 80.

Specifically, the outer diameter dimension D2 of the shaft gear 26 is smaller than the outer diameter dimension D1 of the motor 22 (see FIG. 5). In the gear box housing 50, the body bottom surface 60A of the box body 60 is disposed on an extension of the motor housing bottom surface 14A of the motor housing 14. Therefore, a space is present between the shaft gear 26 and the wall surface of the gear box housing 50 due to the dimensional difference between the outer diameter dimension D1 of the motor 22 and the outer diameter dimension D2 of the shaft gear 26, and the accommodating chamber 72 is formed in this space.

The accommodating chamber 72 is surrounded by the body bottom surface 60A of the gear box housing 50, the body front wall surface 60B, the body rear wall surface 60C, the partition wall 80, the partition wall 40, and the right wall surface 510F of the high-voltage unit housing 510.

As illustrated in FIG. 3, the partition wall 80 is formed with a partition wall extension 80A that extends from an intermediate part of the body front wall surface 60B toward the shaft gear 26 along the body bottom surface 60A, and a partition wall curved part 80B that extends from the partition wall extension 80A and is curved. In addition, the partition wall 80 is formed with a partition wall inclined part 80C that is inclined with the partition wall curved part 80B and the body rear wall surface 60C being coupled to each other.

The partition wall curved part 80B is formed with a circular arc shaped cross-section curved along the shaft gear 26. The partition wall curved part 80B supports, from below, a bearing 82 that rotatably supports a distal end of the shaft 24.

The partition wall curved part 80B is formed such that a lower part of a central axis of the shaft 24 is lowest. Accordingly, a first reservoir part 84 that reserves lubricating oil for lubricating each gear of the gear mechanism 56 is formed by the partition wall curved part 80B on a surface of the partition wall 80 on a gear chamber 70 side. The lubricating oil reserved in the first reservoir part 84 is scooped up by the rotating shaft gear 26.

The partition wall inclined part 80C extends obliquely downward D from the partition wall curved part 80B toward the body rear wall surface 60C. Accordingly, a second reservoir part 86 for reserving lubricating oil is formed on the surface of the partition wall 80 on the gear chamber 70 side by the partition wall inclined part 80C. The lubricating oil reserved in the second reservoir part 86 is scooped up by the rotating interlocking gear 54 or the rotating differential gear 55.

The lower level part constituted by the body top surface 60D of the box body 60 of the gear box 12 is provided with a parking lock actuator 90 for restraining the rotation of the gear mechanism 56 including the shaft gear 26. The parking lock actuator 90 is disposed on a lateral side of the connector 500 (see FIG. 1).

An actuation shaft 90A of the parking lock actuator 90 extends into the gear chamber 70 and engages with an actuation plate 92. An engagement claw 92A that engages with teeth 94A of a lock gear 94 provided at the shaft 24 is provided at a distal end of the actuation plate 92.

When the parking lock actuator 90 forms a locked state, the actuation shaft 90A rotates the actuation plate 92 about a support shaft 92B, and the engagement claw 92A is inserted between the teeth 94A of the lock gear 94. Accordingly, the parking lock actuator 90 prevents the rotation of the gear mechanism 56.

When the parking lock actuator 90 forms an unlocked state, the actuation shaft 90A rotates the actuation plate 92, and the engagement claw 92A is pulled out from between the teeth 94A of the lock gear 94. Accordingly, the parking lock actuator 90 allows the rotation of the gear mechanism 56.

At least a part of the components constituting the inverter 20 is accommodated in the accommodating chamber 72.

The inverter 20 includes a smoothing capacitor 100 that smooths the voltage supplied from the battery via the high-voltage unit 28 (see FIG. 1). In addition, the inverter 20 includes a semiconductor device 102 that forms a three-phase alternating current for driving the motor 22 constituted by a three-phase motor based on the voltage smoothed by the smoothing capacitor 100. The inverter 20 further includes a three-phase electrode part 104 for outputting the three-phase alternating current formed by the semiconductor device 102 to the motor 22.

In the drive unit 10 according to the present embodiment, all of the smoothing capacitor 100, the semiconductor device 102, and the three-phase electrode part 104 constituting the inverter 20 are accommodated in the accommodating chamber 72.

Here, the motor 22 is disposed on the vehicle right R side of the gear box 12, and the three-phase electrode part 104 for outputting the three-phase alternating current formed by the semiconductor device 102 to the motor 22 is accommodated in the accommodating chamber 72 of the gear box 12. Accordingly, a connection distance between the three-phase electrode part 104 and the motor 22 is shortened.

In addition, the high-voltage unit 28 (see FIG. 1) is disposed on the vehicle left L side of the gear box 12, and the smoothing capacitor 100 that smooths the voltage supplied from the high-voltage unit 28 is accommodated in the accommodating chamber 72 of the gear box 12. Accordingly, a length of a harness connecting the high-voltage unit 28 and the smoothing capacitor 100 is shortened.

In the drive unit 10 according to the present embodiment, a case where all of the components of the inverter 20 are accommodated in the accommodating chamber 72 will be described, but the drive unit 10 is not limited to this configuration. In the drive unit 10, for example, a part of the components of the inverter 20 may be accommodated in the accommodating chamber 72.

Further, in the accommodating chamber 72, the smoothing capacitor 100 is disposed on the vehicle rear RR side with respect to the semiconductor device 102. In addition, the three-phase electrode part 104 is disposed on the vehicle front FR side with respect to the semiconductor device 102. The three-phase electrode part 104 constitutes, for example, a bus bar.

The drive unit 10 receives electric power supplied via the high-voltage unit 28 from a PN terminal of the semiconductor device 102 via the smoothing capacitor 100. In addition, the drive unit 10 outputs output from a UVW terminal of the semiconductor device 102 to the motor 22 via the three-phase electrode part 104 constituting a bus bar. Therefore, wiring is easily routed compared to a case where the components of the inverter 20 are arranged in the order of, for example, the semiconductor device 102, the smoothing capacitor 100, and the three-phase electrode part 104.

In the accommodating chamber 72, the smoothing capacitor 100, the semiconductor device 102, and the three-phase electrode part 104 are arranged in this order from the vehicle rear RR side, and the smoothing capacitor 100 and the PN terminal of the semiconductor device 102 to which the smoothing capacitor 100 is connected are disposed on the vehicle rear RR side.

Therefore, in the present embodiment in which the drive unit 10 is disposed on the vehicle front FR side, a distance from the battery disposed on the vehicle rear RR side with respect to the drive unit 10 to the PN terminal of the semiconductor device 102 can be shortened. Accordingly, in the present embodiment, it is possible to shorten the wiring extending from the battery.

When the drive unit 10 is disposed on the vehicle rear RR side, the arrangement of the smoothing capacitor 100 and the three-phase electrode part 104 is interchanged.

### (Functions and Effects)

As described above, the drive unit 10 according to the present embodiment is a unit to be mounted on a vehicle. In the drive unit 10, the high-voltage unit 28 electrically connected to a battery, the motor 22 that allows electric power from the high-voltage unit 28 to be supplied via the inverter 20, and the gear box 12 provided on the shaft 24 of the motor 22 and accommodating the shaft gear 26 having a diameter smaller than the outer diameter dimension D1 of the motor 22 are unitized. In the drive unit 10, at least a part of the components of the inverter 20 is accommodated in the accommodating chamber 72 formed as a space different from the gear chamber 70 that accommodates the shaft gear 26 due to a dimensional difference between the outer diameter dimension D1 of the motor 22 and the outer diameter dimension D2 of the shaft gear 26. In the drive unit 10, in the vehicle mounted state, the motor 22 is disposed on the vehicle right R side of the gear box 12 as one side in the vehicle width direction W, and the high-voltage unit 28 is disposed on the vehicle left L side of the gear box 12 as the other side in the vehicle width direction W.

Accordingly, an excess space generated in the gear box housing 50 due to the dimensional difference between the outer diameter dimension D1 of the motor 22 and the outer diameter dimension D2 of the shaft gear 26 can be effectively used as the accommodating chamber 72.

Further, at least a part of the components of the inverter 20 is accommodated in the accommodating chamber 72. Therefore, in the drive unit 10, it is possible to reduce a space required for the arrangement compared to a case where all the components of the inverter 20 are disposed outside the gear box 12.

Further, the motor 22 that sends a driving force to the gear box 12 is disposed on one side in the vehicle width direction W of the gear box 12, and the high-voltage unit 28 that supplies electric power to the inverter 20 is disposed on the other side in the vehicle width direction W of the gear box 12 in which the components of the inverter 20 are accommodated. Accordingly, the motor 22, the gear box 12, and the high-voltage unit 28 can be unitized by being arranged side by side without complicating the mechanical connection and the electrical connection, and thus it is possible to further reduce the space required for the arrangement.

Here, in the drive unit 10 according to the present embodiment, all the components of the inverter 20 are accommodated in the accommodating chamber 72 of the gear box 12. Therefore, the size of the drive unit 10 is further reduced compared to a case where a part of the components of the inverter 20 is disposed outside.

In addition, a center of gravity of the drive unit 10 may be lowered as compared with a case where an inverter unit in which a part of the components of the inverter 20 is accommodated is disposed above the motor housing 14 or the gear box housing 50. Accordingly, the drive unit 10 can prevent vibration by preventing lateral oscillation during traveling, and may improve traveling stability.

Further, in the drive unit 10, the motor 22 is disposed on the vehicle right R side of the gear box 12 as one side in the vehicle width direction W, and the high-voltage unit 28 is disposed on the vehicle left L side of the gear box 12 as the other side in the vehicle width direction W. Therefore, in the drive unit 10, the center of gravity may be lowered as compared with a case where the high-voltage unit 28 is disposed on the motor 22.

In addition, in the drive unit 10, the gear box 12 is easily disposed at a center of the vehicle and a balance in the center of gravity in the vehicle width direction W may be improved compared to a case where the motor 22 and the high-voltage unit 28 are disposed on one side of the gear box 12. Further, the gear box 12 is disposed at the center of the vehicle, so that lengths of the drive shaft 29 extending from the gear box 12 toward the left and right drive wheels may be made substantially equal.

In addition, the three-phase electrode part 104 for outputting a three-phase alternating current formed by the semiconductor device 102 to the motor 22 is accommodated in the accommodating chamber 72 of the gear box 12. Therefore, a connection distance between the three-phase electrode part 104 and the motor 22 can be shortened as compared with a case where the three-phase electrode part 104 is disposed at a position away from the motor 22.

In addition, the smoothing capacitor 100 for smoothing the voltage supplied from the high-voltage unit 28 is accommodated in the accommodating chamber 72 of the gear box 12. Therefore, a length of a harness connecting the high-voltage unit 28 and the smoothing capacitor 100 can be shortened compared to a case where the smoothing capacitor 100 is disposed at a position away from the high-voltage unit 28.

In addition, in the present embodiment, the gear box housing 50 of the gear box 12 has a shape in which the body front wall surface 60B as one wall surface disposed on a vehicle front-rear direction FB side in the vehicle mounted state does not protrude beyond the motor housing front wall surface 14B as the wall surface of the motor housing 14 accommodating the motor 22 and the high-voltage unit housing front wall surface 510B as the wall surface of the high-voltage unit housing 510 of the high-voltage unit 28.

In such a configuration, the body front wall surface 60B of the gear box housing 50 does not protrude to the vehicle front FR side with respect to the wall surfaces of the motor housing 14 and the high-voltage unit housing 510.

Therefore, for example, at the time of a vehicle collision, the gear box housing 50 can be prevented from interfering with a vehicle body frame or the like prior to the motor housing 14 and the high-voltage unit housing 510. Accordingly, the drive unit 10 may protect the components of the inverter 20 accommodated in the gear box 12.

In addition, in the present embodiment, the body front wall surface 60B as the wall surface of the gear box housing 50 disposed on at least one side on the vehicle front-rear direction FB side in the vehicle mounted state is disposed at a position retracted to the inside of the gear box housing 50 from the motor housing front wall surface 14B as the wall surface of the motor housing 14 and the high-voltage unit housing front wall surface 510B as the wall surface of the high-voltage unit housing 510.

In the drive unit 10 having such a configuration, a space can be formed between the motor housing 14 and the high-voltage unit housing 510 on the vehicle front FR side as at least one of the vehicle front-rear direction FB side in the vehicle mounted state. Accordingly, it is possible to further prevent the body front wall surface 60B of the gear box housing 50 from interfering with an interfering object prior to the motor housing 14 and the high-voltage unit housing 510 at the time of vehicle collision.

Further, by using this space, it is possible to dispose the connector 500 of the wire harness 506 to which a high voltage is supplied and to route the wire harness 506.

In addition, in the present embodiment, the gear box top surface 540 as the top surface of the gear box housing 50 in the vehicle mounted state includes a lower level part (body top surface 60D) located downward D of the motor housing top surface 14D as the top surface of the motor housing 14 and the high-voltage unit housing top surface 510D as the top surface of the high-voltage unit housing 510. Further, the connector 500 of the wire harness 506 connected to the high-voltage unit 28 is disposed in the recessed space 550 as a space formed between the motor housing 14 and the high-voltage unit housing 510 by the lower level part (body top surface 60D).

In the drive unit 10 having such a configuration, the connector 500 is disposed between the motor housing 14 and the high-voltage unit housing 510.

Therefore, an interfering object can be caused to interfere with the motor housing 14 and the high-voltage unit housing 510 prior to the connector 500, for example, at the time of a vehicle collision, and thus it is possible to prevent breakage of the connector 500 and prevent short-circuiting of a high-voltage power supply due to the breakage of the connector 500.

Further, the recessed space 550 is formed by an excess space in the gear box 12 formed around the shaft gear 26 due to a dimensional difference between the outer diameter dimension D1 of the motor 22 and the outer diameter dimension D2 of the shaft gear 26. Accordingly, the drive unit 10 may effectively use the excess space in the gear box 12.

In addition, in the present embodiment, the parking lock actuator 90 capable of restraining rotation of the gear mechanism 56 including the shaft gear 26 is disposed on a lateral side of the connector 500 on the body top surface 60D constituting the lower level part.

In such a configuration, the recessed space 550 formed between the motor housing 14 and the high-voltage unit housing 510 by the body top surface 60D is effectively used as a space in which the parking lock actuator 90 is disposed.

In addition, in the present embodiment, the parking lock actuator 90 is disposed on the vehicle front FR side with respect to the connector 500 in the recessed space 550.

Therefore, it is possible to cause an interfering object to interfere with the parking lock actuator 90 prior to the connector 500, for example, at the time of a vehicle collision, and thus it is possible to prevent breakage of the connector 500 and prevent short-circuiting of the high-voltage power supply due to the breakage of the connector 500.

### <First Modification>

Next, a drive unit 600 according to a first modification will be described.

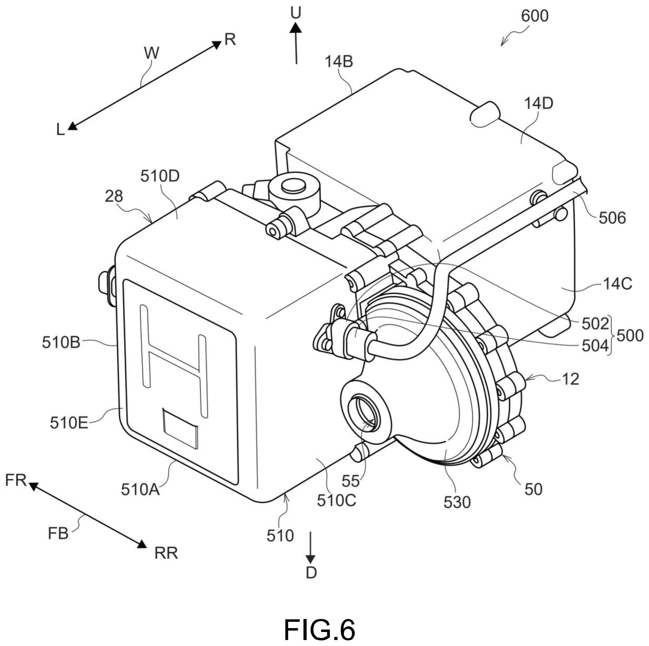

FIG. 6 is a perspective view illustrating the drive unit 600 according to the first modification of the present embodiment. In the drive unit 600 according to the first modification, the same or equivalent portions as those of the above-described embodiment are denoted by the same reference numerals and the description thereof is omitted, and only different portions will be described.

As illustrated in FIG. 6, in the drive unit 600 according to the first modification, the connector 500 for connecting the wire harness 506 and the high-voltage unit 28 is provided at a different position compared to the above-described embodiment.

That is, the gear box 12 includes the differential gear 55. The differential gear accommodating part 530 of the gear box housing 50 in which the differential gear 55 is disposed protrudes to the vehicle rear RR side, which is one side on the vehicle front-rear direction FB side, with respect to the high-voltage unit housing rear wall surface 510C of the high-voltage unit housing 510 of the high-voltage unit 28 in the vehicle mounted state.

In addition, the differential gear accommodating part 530 is formed in a mountain shape in which a central part thereof through which the drive shaft 29 (see FIG. 2) is inserted protrudes to the vehicle left L side, which is one side in the vehicle width direction W.

The socket 502 of the connector 500 that supplies electric power to the high-voltage unit 28 is disposed on the high-voltage unit housing rear wall surface 510C at a side portion of the differential gear accommodating part 530 on the vehicle left L side in the vehicle width direction W. In addition, the socket 502 is disposed at a position avoiding interference with the differential gear accommodating part 530 formed in a mountain shape.

Accordingly, the connector 500 including the socket 502 and the plug 504 connected to the socket 502 is disposed on the lateral side of the differential gear accommodating part 530 in a state of protruding in a protruding direction of the differential gear accommodating part 530. In other words, the connector 500 including the socket 502 and the plug 504 is disposed in a projection plane obtained by projecting the differential gear accommodating part 530 in the vehicle width direction W.

Further, the wire harness 506 connected to the plug 504 passes through an upper portion of the differential gear accommodating part 530, and is then routed along the motor housing rear wall surface 14C.

### (Functions and Effects)

In the first modification configured in this way, the same or equivalent portions as those of the above-described embodiment have the same functions and effects as those of the above-described embodiment.

In addition, in the drive unit 600 according to the present modification, the gear box 12 includes the differential gear 55, and the differential gear accommodating part 530 of the gear box housing 50 in which the differential gear 55 is disposed protrudes to the vehicle rear RR side, which is one side on the vehicle front-rear direction FB side, with respect to the high-voltage unit housing 510 of the high-voltage unit 28 in the vehicle mounted state. The connector 500 of the wire harness 506 connected to the high-voltage unit 28 is disposed on a lateral side of the differential gear accommodating part 530 in a state of protruding in a protruding direction of the differential gear accommodating part 530.

In such a configuration, the differential gear accommodating part 530 in which the differential gear 55 is accommodated protrudes to the vehicle rear RR side, which is one side on the vehicle front-rear direction FB side, with respect to the high-voltage unit housing 510 due to a structure in which the drive shaft 29 (see FIG. 2) extends in the vehicle width direction W. Therefore, in the drive unit 600, it is difficult to dispose components and the like around the differential gear accommodating part 530, and a peripheral portion of the differential gear accommodating part 530 tends to be a dead space.

Here, in the drive unit 600 according to the present modification, the connector 500 connected to the high-voltage unit 28 is disposed on the lateral side of the differential gear accommodating part 530 in a state of protruding from the high-voltage unit housing rear wall surface 510C in the protruding direction of the differential gear accommodating part 530. Accordingly, the dead space around the differential gear accommodating part 530 is effectively used as a place where the connector 500 is disposed.

In addition, the connector 500 protruding from the high-voltage unit housing 510 is disposed on the lateral side of the differential gear accommodating part 530.

Therefore, it is possible to cause an interfering object to interfere with the differential gear accommodating part 530 prior to the connector 500, for example, at the time of a vehicle collision, and thus it is possible to prevent breakage of the connector 500 and prevent short-circuiting of the high-voltage power supply due to the breakage of the connector 500.

### <Second Modification>

Next, a drive unit 700 according to a second modification will be described.

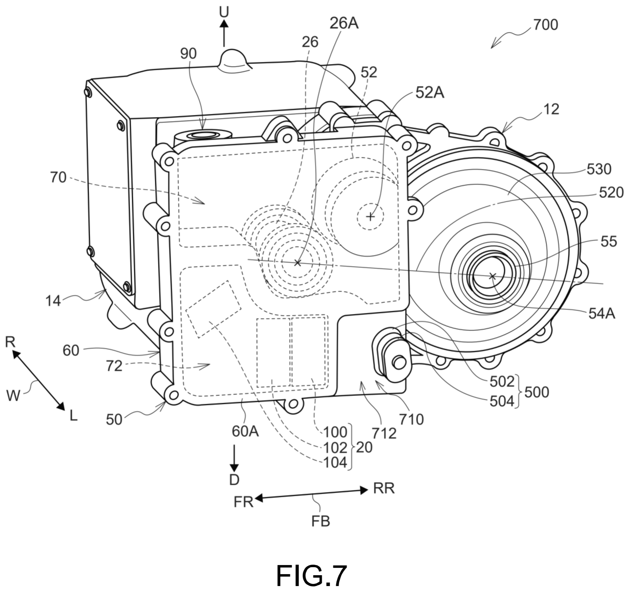

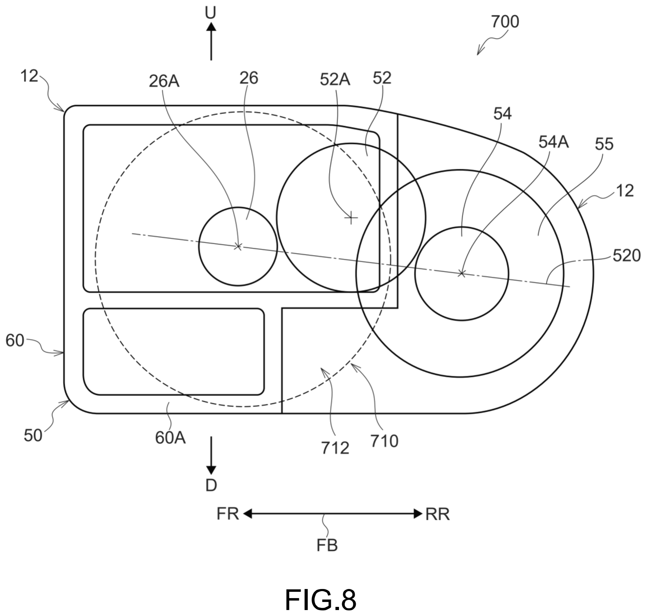

FIG. 7 is a perspective view illustrating the drive unit 700 according to the second modification of the present embodiment, and FIG. 7 illustrates a state where the high-voltage unit 28 is detached. FIG. 8 is a schematic diagram illustrating the drive unit 700 according to the second modification of the present embodiment.

In the drive unit 700 according to the second modification, the same or equivalent portions as those of the above-described embodiment or the first modification will be denoted by the same reference numerals and the description thereof will be omitted, and only different portions will be described.

As illustrated in FIGS. 7 and 8, in the drive unit 700 according to the second modification, the connector 500 for connecting the wire harness 506 and the high-voltage unit 28 (see FIG. 1) is provided at a different position compared to the above-described embodiment or the first modification.

As illustrated in FIG. 8, the gear box 12 includes the meshing gear 52 that meshes with the shaft gear 26 and the interlocking gear 54 that interlocks with the meshing gear 52. The meshing gear rotational axis 52A of the meshing gear 52 is disposed at a position shifted to the upper U side from the virtual straight line 520 connecting the shaft gear rotational axis 26A of the shaft gear 26 and the interlocking gear rotational axis 54A of the interlocking gear 54.

Further, the gear box housing 50 of the gear box 12 is provided with a recess 710 at a portion on the opposite side of the meshing gear 52 with the virtual straight line 520 as a boundary, the recess 710 being formed by a peripheral edge of the gear box housing 50 being retracted inward.

Specifically, a corner of the body bottom surface 60A of the box body 60 of the gear box housing 50 on the vehicle rear RR side is retracted to the inside of the gear box housing 50, and the recess 710 is provided in the body bottom surface 60A of the gear box housing 50.

A lower recessed space 712 is formed, by the recess 710, between the motor housing 14 accommodating the motor 22 and the high-voltage unit housing 510 of the high-voltage unit 28 (see FIG. 1 and the like).

The socket 502 (see FIG. 1) constituting the connector 500 is provided at a portion of the wall surface of the high-voltage unit housing 510 facing the lower recessed space 712. The plug 504 of the wire harness 506 (see FIG. 1) connected to a battery is detachably connected to the socket 502.

Accordingly, the connector 500 including the socket 502 and the plug 504 for connecting the wire harness 506 to the high-voltage unit 28 is disposed in the lower recessed space 712.

### (Functions and Effects)

In the second modification configured in this way, the same or equivalent portions as or to those of the above-described embodiment or the first modification have the same functions and effects as those of the above-described embodiment or the first modification.

In addition, in the drive unit 700 according to the present modification, the gear box 12 includes the meshing gear 52 that meshes with the shaft gear 26 and the interlocking gear 54 that interlocks with the meshing gear 52. The meshing gear rotational axis 52A as the rotational axis of the meshing gear 52 is shifted to the upper U side, which is one side with the virtual straight line 520 as a boundary, the virtual straight line 520 connecting the shaft gear rotational axis 26A as the rotational axis of the shaft gear 26 and the interlocking gear rotational axis 54A as the rotational axis of the interlocking gear 54. In the gear box housing 50 of the gear box 12, the recess 710 is provided at a portion on the opposite side of the meshing gear 52 with the virtual straight line 520 as a boundary, the recess 710 being formed by the body bottom surface 60A constituting the peripheral edge of the gear box housing 50 being retracted inward. The connector 500 of the wire harness 506 connected to the high-voltage unit 28 is disposed in the recess 710.

In such a configuration, the meshing gear rotational axis 52A of the meshing gear 52 is disposed on the upper U side with the virtual straight line 520 as a boundary, the virtual straight line 520 connecting the shaft gear rotational axis 26A of the shaft gear 26 and the interlocking gear rotational axis 54A of the interlocking gear 54. Therefore, the dimension of the gear box 12 in the vehicle front-rear direction FB can be reduced compared to a case in which the shaft gear rotational axis 26A, the meshing gear rotational axis 52A, and the interlocking gear rotational axis 54A are disposed on a straight line extending to the vehicle front-rear direction FB side. Accordingly, the drive unit 10 may be downsized.

Further, the meshing gear rotational axis 52A of the meshing gear 52 is disposed on the upper U side with respect to the virtual straight line 520 connecting the shaft gear rotational axis 26A of the shaft gear 26 and the interlocking gear rotational axis 54A of the interlocking gear 54, so that an excess space is formed downward D of the meshing gear 52.

Therefore, the drive unit 700 is provided with the recess 710 at a portion downward D of the meshing gear 52 opposite to the meshing gear 52 with the virtual straight line 520 as a boundary, the recess 710 being formed by the body bottom surface 60A of the gear box housing 50 being retracted inward. Further, the connector 500 is disposed in the lower recessed space 712 formed by the recess 710.

Accordingly, the excess space formed downward D of the meshing gear 52 is effectively used as the lower recessed space 712 in which the connector 500 is disposed.

Further, the box body 60 of the gear box housing 50 is provided on the vehicle front FR side of the connector 500 disposed in the lower recessed space 712, and the differential gear accommodating part 530 protrudes to the vehicle rear RR side with respect to the connector 500. In addition, the motor housing 14 is provided on the vehicle right R side of the connector 500, and the high-voltage unit housing 510 (see FIG. 1) is provided on the vehicle left L side of the connector 500.

Therefore, the connector 500 is protected in a state of being surrounded by the gear box housing 50, the differential gear accommodating part 530, the motor housing 14, and the high-voltage unit housing 510. Accordingly, it is possible to prevent breakage of the connector 500 caused by interference with an interfering object and to prevent short-circuiting of the high-voltage power supply caused by the breakage of the connector 500.

When the gear box housing 50 is provided with a reinforcing rib protruding outward with respect to the motor housing 14 and the high-voltage unit housing 510, an interfering object interfering with the drive unit 10, for example, at the time of a vehicle collision can be caused to interfere with the reinforcing rib in advance. Accordingly, it is possible to reduce the input to the connector 500, the motor 22 of the motor housing 14, or the inverter 20 provided in the gear box 12.

The embodiment and the modifications of the present invention have been described above, but the embodiment and the modifications merely show a part of the application examples of the present invention, and the technical scope of the present invention is not limited to the specific configurations of the embodiment and the modifications.

The drive units 10, 600, and 700 according to the present embodiment and the modifications described above have been described using an example of an electric vehicle that travels by being driven by the motor 22 with electric power of a battery, but the drive units 10, 600, and 700 are not limited thereto. For example, a vehicle provided with an engine may be a series hybrid automobile that drives the motor 22 by electric power generated by the engine.

In addition, in the present embodiment and the modifications, the case where the drive units 10, 600, and 700 are disposed such that the differential gear accommodating part 530 of the gear box housing 50 protrudes to the vehicle rear RR side has been described as an example. However, the arrangement of the drive units 10, 600, and 700 is not limited thereto. For example, the drive units 10, 600, and 700 may be disposed such that the differential gear accommodating part 530 of the gear box housing 50 protrudes to the vehicle front FR side.

## Claims

1. A drive unit to be mounted on a vehicle, the drive unit comprising:
a high-voltage unit electrically connected to a battery;
a motor configured to allow electric power from the high-voltage unit to be supplied via an inverter; and
a gear box provided on a shaft of the motor and configured to accommodate a shaft gear having a diameter smaller than an outer diameter dimension of the motor, the high-voltage unit, the motor, and the gear box being unitized, wherein
at least a part of components of the inverter is accommodated in an accommodating chamber formed as a space different from a gear chamber accommodating the shaft gear due to a dimensional difference between the outer diameter dimension of the motor and an outer diameter dimension of the shaft gear, and
in a vehicle mounted state, the motor is disposed on one side in a vehicle width direction of the gear box, and the high-voltage unit is disposed on the other side in the vehicle width direction of the gear box.

2. The drive unit according to claim 1, wherein
a gear box housing of the gear box has a shape in which at least one wall surface thereof disposed on a vehicle front-rear direction side in the vehicle mounted state does not protrude beyond a wall surface of a motor housing accommodating the motor and a wall surface of a high-voltage unit housing of the high-voltage unit.

3. The drive unit according to claim 2, wherein
the wall surface of the gear box housing disposed on at least one side on the vehicle front-rear direction side in the vehicle mounted state is disposed at a position retracted to inside of the gear box housing from the wall surface of the motor housing and the wall surface of the high-voltage unit housing.

4. The drive unit according to claim 2, wherein
in the vehicle mounted state, a top surface of the gear box housing has a lower level part located below a top surface of the motor housing and a top surface of the high-voltage unit housing, and
a connector of a wire harness connected to the high-voltage unit is disposed in a space formed between the motor housing and the high-voltage unit housing by the lower level part.

5. The drive unit according to claim 4, wherein
a parking lock actuator capable of restraining rotation of a gear mechanism including the shaft gear is disposed at the lower level part on a lateral side of the connector.

6. The drive unit according to claim 1, wherein
the gear box includes a differential gear, and a differential gear accommodating part of a gear box housing, in which the differential gear is disposed, protrudes to one side on a vehicle front-rear direction side with respect to a high-voltage unit housing of the high-voltage unit in the vehicle mounted state, and
a connector of a wire harness connected to the high-voltage unit is disposed on a lateral side of the differential gear accommodating part in a state of protruding in a protruding direction of the differential gear accommodating part.

7. The drive unit according to claim 1, wherein
the gear box includes a meshing gear that meshes with the shaft gear and an interlocking gear that interlocks with the meshing gear, and a rotational axis of the meshing gear is shifted to one side with a virtual straight line as a boundary, the virtual straight line connecting a rotational axis of the shaft gear and a rotational axis of the interlocking gear, and
a recess being formed by a peripheral edge of the gear box housing retracted inward is provided in a gear box housing of the gear box at a portion on a side opposite to the meshing gear with the virtual straight line as a boundary, and a connector of a wire harness connected to the high-voltage unit is disposed in the recess.
